# EUROPÄISCHE PATENTANMELDUNG

(11) **EP 4 779 420 A1**
(43) Veröffentlichungstag der Anmeldung: **22.07.2026**
(21) Anmeldenummer: 26152998.6
(22) Anmeldetag: 20.01.2026
(51) Int. Cl.: G05B 19/418, G06N 3/02

(54) **ANALYSIEREN VON BAUTEILEN IN EINEM INDUSTRIELLEN FERTIGUNGSPROZESS**

(30) Priorität: 21.01.2025 DE 102025102001
(71) Anmelder: ZF Friedrichshafen AG, 88046 Friedrichshafen (DE)
(72) Erfinder: Thewes, Nicolas, 66113 Saarbrücken (DE); Schneider, Georg, 56182 Urbar (DE)
(74) Vertreter: ZF Friedrichshafen AG

(57) **Zusammenfassung**

Verfahren zum Analysieren von Bauteilen, insbesondere deren Qualität, in einem industriellen Fertigungsprozess mit den folgenden Schritten:
- Bereitstellen (S1) von ein zu analysierendes Bauteil betreffende Eingangs-daten erster Art;
- Bereitstellen (S2) von ein zu analysierendes Bauteil betreffende Eingangs-daten zweiter Art;
wobei die Eingangsdaten erster Art und die Eingangsdaten zweiter Art auf Sensordaten verschiedener physikalischer Messprinzipien beruhen und/oder Sensordaten und prozessuale Daten umfassen;
- Transformieren (S3) der Eingangsdaten erster Art und zweiter Art und/oder hieraus jeweils abgeleiteter Daten in einen gemeinsamen Vektorraum, um transformierte Eingangsdaten zu erhalten;
- Analysieren (S4) der transformierten Eingangsdaten, mit dem Ziel, die transformierten Eingangsdaten zu klassifizieren.

## Beschreibung

### GEBIET DER ERFINDUNG

Die vorliegende Erfindung betrifft ein Verfahren zum Analysieren von Bauteilen, insbesondere deren Qualität, in einem industriellen Fertigungsprozess.

### ZUSAMMENFASSUNG DER ERFINDUNG

Demgemäß ist vorgesehen:
- Ein Verfahren zum Analysieren von Bauteilen, insbesondere deren Qualität, in einem industriellen Fertigungsprozess mit den folgenden Schritten: Bereitstellen von ein zu analysierendes Bauteil betreffende Eingangsdaten erster Art; Bereitstellen von ein zu analysierendes Bauteil betreffende Eingangsdaten zweiter Art, wobei die Eingangsdaten erster Art und die Eingangsdaten zweiter Art auf Sensordaten verschiedener physikalischer Messprinzipien beruhen und/oder Sensordaten und prozessuale Daten umfassen; Transformieren der Eingangsdaten erster Art und zweiter Art und/oder hie-raus jeweils abgeleiteter Daten in einen gemeinsamen Vektorraum, um trans-formierte Eingangsdaten zu erhalten; Analysieren der transformierten Eingangsdaten, mit dem Ziel, die transformierten Eingangsdaten zu klassifizieren.

Ein Sensor, auch als Detektor, (Messgrößen- oder Mess-)Aufnehmer oder (Mess-)Fühler bezeichnet, ist ein technisches Bauteil, das bestimmte physikalische, chemische Eigenschaften oder Zustände, z. B. Temperatur, Feuchtigkeit, Druck, Geschwindigkeit, Helligkeit, Beschleunigung, pH-Wert, Ionenstärke, elektrochemisches Potential und/oder die stoffliche Beschaffenheit seiner Umgebung qualitativ oder als Messgröße quantitativ erfassen kann. Diese Größen werden mittels physikalischer oder chemischer Effekte erfasst und als Sensordaten in ein weiterverarbeitbares elektrisches Signal umgeformt.

Ein industrieller Fertigungsprozess bezeichnet eine methodische Abfolge von Arbeitsschritten und Technologien, die zur Herstellung von Gütern verwendet werden. Dieser Prozess ist in der Regel standardisiert und wird durch maschinelle, automatisierte oder manuelle Verfahren unterstützt, um Effizienz, Konsistenz und Qualität sicherzustellen.

Um Eingangsdaten unterschiedlicher Struktur in einen hochdimensionalen Vektorraum zu transformieren, werden sowohl deterministische als auch nicht-deterministische Verfahren angewandt, die darauf abzielen, die wesentlichen Merkmale der Daten zu erfassen und in einer geeigneten mathematischen Form darzustellen. Diese Transformation beginnt mit der Vorverarbeitung der Daten, bei der Eingangsformate wie Bilder, Texte oder numerische Werte in eine numerische Repräsentation überführt werden. Beispielsweise können Texte durch Einbettungsverfahren in Vektoren kodiert werden, numerische Daten werden normalisiert, und Bilder werden als Arrays von Pixelwerten dargestellt.

Im nächsten Schritt erfolgt die Merkmalsextraktion, bei der bedeutungsvolle Eigenschaften aus den Daten abgeleitet werden, dieser Schritt resultiert in einer Einbettung der Daten in einen (hochdimensionalen) Vektorraum. Dies kann durch manuell definierte Merkmale oder durch Verfahren wie Principal Component Analysis (PCA), Fourier-Transformation oder andere mathematische und statistische Methoden geschehen. Alternativ kann eine solche Einbettung mit Methoden der Künstlichen Intelligenz erzeugt werden, wobei das Künstliche Intelligenz System mit Hilfe geeigneter Trainingsmethoden, wie z.B. Auto-Encoder, Contrastiv-Learning, u.ä. trainiert wird Dieser Vektorraum bildet die Grundlage für weitere Analysen, Vorhersagen oder Entscheidungsfindungen.

Klassifizieren bedeutet, dass Daten eine Klasse zugeordnet wird.

Oft wird beim Klassifizieren einem Datensatz eine Wahrscheinlichkeit pro Klasse zugeordnet. Übersteigt die Wahrscheinlichkeit einer Klasse einen vorgegebenen Schwellwert, werden die Daten als zu der Klasse zugehörig klassifiziert. Bei einem Klassifikationsverfahren gibt es mehrere Möglichkeiten, warum einem Datensatz keine Klasse zugeordnet wird, etwa wenn keine Klassenwahrscheinlichkeit den vorgegebenen Grenzwert überschreitet, oder schon während des Trainings kann ein Modell eine Klasse "unbekannt" erlernen. Die Zuordnung von Eingangsdaten zu einer "unbekannt" Klasse entspricht einer "Nicht-Klassifizierung". Eine "unbekannt" Klasse kann angewendet werden, wenn in einem Trainingsdatensatz Daten vorhanden sind, deren Klasse nicht bekannt ist oder eine zu geringe Anzahl aufweisen.

Historische Eingangsdaten sind zuvor erfasste und gespeicherte Daten, zum Beispiel aus früheren Durchläufen eines Analyse- oder Produktionsprozesses, die nun als Vergleichs- oder Referenzdaten für die aktuelle Analyse verwendet werden. Diese Daten können Sensordaten, prozessuale Daten oder andere Arten von Daten umfassen, die in früheren Phasen der Analyse von Bauteilen bereitgestellt wurden. Sie dienen dazu, Muster und Ähnlichkeiten zu erkennen, Anomalien zu identifizieren oder frühere Klassifikationen und Prüfungen mit aktuellen Daten in Beziehung zu setzen.

Im Kontext eines Verfahrens zur Analyse von Bauteilen können historische Eingangsdaten verwendet werden, um die aktuellen Eingangsdaten erster und zweiter Art mit vergangenen Datensätzen zu vergleichen und auf diese Weise die Klassifikation und Bewertung der Bauteile zu erleichtern.

Alternative Mittel zur Analyse von Eingangsdaten könnten beispielsweise die manuelle Überprüfung durch einen Experten sein, der auf Grundlage von Erfahrung und Fachwissen die Daten interpretiert und bewertet. Weitere Alternativen sind regelbasierte Systeme, die vorab definierte Entscheidungsregeln anwenden, oder statistische Methoden wie Regressionsanalysen, um Zusammenhänge in den Daten zu erkennen. Auch visuelle Inspektionen, etwa durch die Nutzung von grafischen Darstellungen der Daten, oder der Einsatz von Simulationen zur Vorhersage bestimmter Verhaltensweisen des Bauteils könnten eingesetzt werden.

Ein deskriptiver Text besteht aus beschreibenden Informationen, die meist in natürlicher Sprache verfasst sind und qualitative oder strukturierte Informationen vermitteln. Typische Beispiele sind Berichte, Benutzereingaben oder Kommentare, die Sachverhalte, Prozesse oder Beobachtungen erläutern. Diese Texte können unstrukturiert sein und dienen der Dokumentation, Erklärung oder Beschreibung von Vorgängen, Objekten oder Ergebnissen. Teilelisten sind auch deskriptive Texte.

Computerprogrammprodukte umfassen in der Regel eine Folge von Befehlen, durch die die Hardware bei geladenem Programm veranlasst wird, ein bestimmtes Verfahren durchzuführen, das zu einem bestimmten Ergebnis führt.

Die grundlegende Idee der Erfindung ist es, ein universelles Analyseverfahren für ein Bauteil betreffende Eingangsdaten, unabhängig von deren Struktur, Herkunft, Ursprung und dergleichen zu schaffen.

Zunächst werden Eingangsdaten erster und zweiter Art bereitgestellt, die auf unterschiedlichen physikalischen Messprinzipien basieren können oder eine Kombination aus Sensordaten und prozessualen Daten darstellen. Diese Vielfalt an Eingangsdaten stellt sicher, dass verschiedene Aspekte des Bauteils, sowohl in Bezug auf seine physikalischen Eigenschaften als auch auf die Prozessbedingungen, berücksichtigt werden.

Eingangsdaten erster Art und zweiter Art beziehen sich auf zwei grundlegend unterschiedliche Typen von Daten, die zur Analyse von Bauteilen in einem industriellen Fertigungsprozess verwendet werden. Die Eingangsdaten erster und zweiter Art können also eine Kombination verschiedene Sensordaten, die auf verschiedenen physikalischen Messprinzipien beruhen können, umfassen.

Unterschiedliche physikalische Messprinzipien beziehen sich auf die Methoden, mit denen physikalische Größen oder Eigenschaften erfasst werden. Ein Beispiel für ein optisches Messprinzip ist die Verwendung von Kameras, Infrarotsensoren oder LIDAR-Systemen. Diese Technologien beruhen auf der Erfassung von Licht, sei es sichtbares Licht, Infrarotlicht oder Laserstrahlen, und werden eingesetzt, um Oberflächeneigenschaften, Entfernungen oder Formen zu messen, indem sie das reflektierte oder gestreute Licht analysieren.

Ein weiteres Beispiel ist das akustische Messprinzip, das auf der Detektion von Schallwellen basiert. Ultraschallsensoren und Mikrofone nutzen Schall, um Informationen wie Entfernungen, Materialdichten oder strukturelle Integrität und Qualität zu erfassen. Hierbei wird häufig das Echo der Schallwellen ausgewertet, um Rückschlüsse auf die Eigenschaften der Umgebung zu ziehen.

Elektromagnetische Messprinzipien beruhen auf der Wechselwirkung von elektromagnetischen Feldern oder Wellen mit Materialien. Ein typisches Beispiel hierfür ist die Radartechnologie, die Mikrowellen verwendet, um Entfernungen oder Geschwindigkeiten zu messen.

Elektrische Messprinzipien umfassen die Messung von elektrischen Größen wie Stromstärke, Spannung oder Widerstand.

Mechanische Messprinzipien basieren auf der Verformung oder Bewegung eines Materials. Ein Dehnungsmessstreifen misst beispielsweise die Dehnung eines Materials unter Belastung, während Drucksensoren den Druck erfassen, der auf eine Oberfläche ausgeübt wird. Diese Messungen sind entscheidend, um Kräfte, Druck oder mechanische Spannungen in Materialien zu bestimmen.

Thermische Messprinzipien erfassen Temperaturänderungen oder den Wärmefluss. Hierbei können Thermoelemente oder Infrarot-Thermometer verwendet werden. Während Thermoelemente die Temperatur durch direkten Kontakt messen, erfasst ein Infrarot-Thermometer die Wärmestrahlung eines Objekts kontaktlos.

Zeitmessprinzipien hingegen beziehen sich auf die Messung der Dauer von Ereignissen oder der Zeit zwischen ihnen.

Chemische Messprinzipien basieren auf der chemischen Reaktion Wechselwirkung von Substanzen, um deren Eigenschaften oder Zusammensetzungen zu bestimmen. Beispiele hierfür sind pH-Meter, die den Säuregrad einer Lösung messen, oder Gaschromatographen, die die Zusammensetzung eines Gasgemisches analysieren.

Diese unterschiedlichen physikalischen Messprinzipien erfassen jeweils verschiedene Arten von Informationen, die auf unterschiedlichen Naturgesetzen beruhen. So erfassen optische und akustische Messprinzipien unterschiedliche Aspekte desselben Objekts, wie visuelle Strukturen im Vergleich zu internen Strukturen, während mechanische und thermische Messprinzipien andere physikalische Eigenschaften wie Druck oder Temperaturänderungen aufdecken können.

Es ist eine Idee der Erfindung, Eingangsdaten von derart verschiedener Struktur gemeinsam und übergreifend auszuwerten.

Alternativ können die Eingangsdaten erster und zweiter Art auch eine Kombination aus Sensordaten und prozessualen Daten umfassen.

Beispiele für solche Daten sind Prozessdaten, die Informationen über den Herstellungsprozess eines Bauteils liefern, wie Maschinenparameter oder Produktionsbedingungen, sowie Benutzereingaben, wie Prüfprotokolle oder Qualitätsbewertungen, die manuell eingegeben werden. Auch softwaregenerierte Logs, die den Status oder den Verlauf von Produktionsprozessen dokumentieren, gehören zu den Eingangsdaten zweiter Art. Beispielsweise lassen sich aus Vibrationsdaten einer Fertigungsmaschine Rückschlüsse auf die von der Maschine gefertigten Bauteile ziehen.

Die strukturellen Unterschiede zwischen beiden Eingangsdatenarten, also erster und zweiter Art, sind wesentlich für das Verfahren. Diese strukturelle Unterschiedlichkeit ermöglicht es, verschiedene Perspektiven auf das Bauteil zu integrieren, was zu einer umfassenderen Analyse und Bewertung der Bauteilqualität führt. Die Kombination von unmittelbaren physikalischen Messdaten und prozessualen Informationen gewährleistet eine tiefgehende Analyse der Bauteile im Fertigungsprozess.

Durch das Transformieren dieser unterschiedlichen Daten in einen gemeinsamen Vektorraum wird eine einheitliche Basis für die Analyse geschaffen, unabhängig von den ursprünglichen Datenformaten oder -quellen. Dies gewährleistet, dass die verschiedenen Datentypen miteinander in Beziehung gesetzt und gemeinsam ausgewertet werden können. Durch die Wechselwirkung des Informationsgehalts in den Daten erster und zweiter Art, ist auch ein Informationsgewinn gegenüber einer gesonderten Auswertung von Eingangsdaten erster und zweiter Art gegeben.

Schließlich erfolgt die Analyse der transformierten Daten mit dem Ziel, diese zu klassifizieren. Es versteht sich, dass eine Klassifikation nur dann möglich ist, wenn eine zuzuordnende Klasse bereits bekannt ist.

Schließlich erfolgt die Analyse der transformierten Daten mit dem Ziel, diese einer spezifischen Klasse zuzuordnen. Dabei ist zu beachten, dass der Begriff der Klassifikation in diesem Zusammenhang nur solche Zuordnungen umfasst, bei denen die Daten einer bereits definierten und bekannten Klasse eindeutig zugeordnet werden können. Zuordnungen zu allgemeinen oder unspezifischen Kategorien, die lediglich als Sammelklassen für nicht zuordenbare Daten dienen, sind von der Bedeutung des Begriffs "klassifizieren" in diesem Kontext nicht erfasst. Solche Sammelklassen können zwar existieren, jedoch werden sie nicht als Teil des eigentlichen Klassifikationsprozesses betrachtet, der auf die präzise Zuordnung zu klar definierten, spezifischen Klassen abzielt.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer bevorzugten Weiterbildung der Erfindung wird eine oder mehrere Ähnlichkeiten zwischen den transformierten Eingangsdaten und historischen transformierten Eingangsdaten ermittelt, insbesondere wenn die transformierten Eingangsdaten nicht mit einer Klassifikationswahrscheinlichkeit, die einen vorbestimmten Schwellwert übersteigt, klassifiziert wurden oder einer "Unbekannt"-Klasse zugeordnet wurden.

Die Verwendung von historischen Daten als Referenz kann die Notwendigkeit einer manuellen Inspektion reduzieren. Durch die Ermittlung von Ähnlichkeiten zwischen den transformierten Eingangsdaten und historischen transformierten Daten wird sichergestellt, dass auch in Fällen, in denen die transformierten Daten keiner bekannten Klasse mit ausreichender Sicherheit zugeordnet werden können, dennoch relevante Informationen gewonnen werden. Dies ermöglicht es, Zusammenhänge oder Muster zu erkennen, die andernfalls unbemerkt geblieben wären.

Gemäß einer bevorzugten Weiterbildung der Erfindung wird eine Ähnlichkeit der transformierten Eingangsdaten zu historischen transformierten Eingangsdaten ermittelt, indem eine Metrik vorgegeben wird, und basierend auf der Metrik ein Abstand zwischen den transformierten Eingangsdaten und den historischen transformierten Eingangsdaten ermittelt wird.

Durch die Vorgabe einer Metrik und die darauf basierende Ermittlung des Abstands zwischen den transformierten Eingangsdaten und den historischen transformierten Daten wird eine präzise Vergleichbarkeit der Daten ermöglicht. Dies führt zu einer strukturierten und konsistenten Analyse, die es erlaubt, Ähnlichkeiten objektiv und nachvollziehbar zu bestimmen. Geeignete Metriken sind zum Beispiel die euklidische Norm, Manhattan-Norm (L1-Norm), Kosinus-Ähnlichkeit, Minkowski-Norm, und/oder dergleichen.

Dementsprechend ist es auch denkbar, bereitgestellte Eingangsdaten und deren zugehörigen transformierten Eingangsdaten als historische Daten für zukünftige Analysen zu speichern. Dabei können spezifische Verfahren zur Auswahl von Daten, die als historische Daten gespeichert werden, vorgesehen sein. Dies kann umfassen, dass für spezifische Merkmale ein oder mehrere Repräsentanten gespeichert werden, um zu verhindern, dass alle Daten gespeichert werden.

Gemäß einer bevorzugten Weiterbildung der Erfindung werden neben einer ermittelten Ähnlichkeit zwischen transformierten Eingangsdaten und historischen transformierten Eingangsdaten zu den historischen transformierten Eingangsdaten gehörige, bereitgestellte Eingangsdaten ausgegeben, um das Bauteil mit alternativen Mitteln zu analysieren.

Die Ausgabe von zu historischen Daten gehörigen Eingangsdaten bietet zusätzliche Informationen, die für Menschen interpretierbar sind und eine detaillierte Nachanalyse oder Fehlerbehebung nützlich sein können, besonders wenn menschliche Experten involviert sind.

Gemäß einer bevorzugten Weiterbildung der Erfindung sind die Eingangsdaten erster Art als das zu analysierende Bauteil direkt betreffende Sensordaten ausgebildet.

In Betracht kommende Sensordaten können beispielsweise optische Messungen sein, die durch Kameras oder LIDAR-Systeme erfasst werden und detaillierte Informationen über die Oberflächenstruktur des Bauteils liefern. Ebenfalls möglich sind akustische Daten, die durch Ultraschallsensoren gewonnen werden bzw. Vibrationsdaten, die durch Vibrationsmessung gewonnen werden, und zur Prüfung der inneren Struktur auf mögliche Defekte verwendet werden. Thermische Sensordaten, erfasst durch Infrarotkameras oder Thermoelemente, könnten Temperaturverteilungen und Hotspots auf dem Bauteil detektieren. Weitere Beispiele sind elektrische Messungen, wie die Erfassung von Leitfähigkeit oder Widerstand, sowie mechanische Messungen, die durch Drucksensoren oder Dehnungsmessstreifen durchgeführt werden, um die strukturelle Integrität des Bauteils zu überprüfen.

Gemäß einer bevorzugten Weiterbildung der Erfindung umfassen die Sensordaten Geometriedaten des zu analysierenden Bauteils.

Die Einbeziehung von Geometriedaten des Bauteils ermöglicht eine präzise und detaillierte Analyse der Bauteilstruktur. Dies gewährleistet eine verbesserte Erkennung von Fertigungsabweichungen oder strukturellen Defekten.

Gemäß einer bevorzugten Weiterbildung der Erfindung umfassen die Eingangsdaten zweiter Art prozessuale Daten zu einem das Bauteil betreffenden Prozess.

Die Integration von prozessualen Daten zu einem das Bauteil betreffenden Prozess ermöglicht eine umfassende Sicht auf den Produktionsablauf. Somit können potenzielle Fehlerquellen im Herstellungsprozess identifiziert werden.

In Betracht kommende prozessuale Daten zweiter Art können beispielsweise Informationen über die Temperatur und den Druck während eines Fertigungsprozesses sein, die wichtige Einblicke in die Bedingungen geben, unter denen das Bauteil hergestellt wurde. Weitere relevante prozessuale Daten könnten die Geschwindigkeit und Dauer von Bearbeitungsschritten umfassen, wie etwa die Drehzahl eines Fräsers oder die Zeit, die für das Härten eines Bauteils benötigt wird. Auch Materialchargen-Informationen, die den genauen Ursprung und die Zusammensetzung des eingesetzten Materials dokumentieren, sowie die Wartungs- und Kalibrierdaten der eingesetzten Maschinen, die Einfluss auf die Prozessqualität haben, sind typische Beispiele für prozessuale Daten, die für die Analyse des Bauteils herangezogen werden könnten.

Gemäß einer bevorzugten Weiterbildung der Erfindung betreffen die prozessualen Daten einen Herstellungsprozess des Bauteils, insbesondere Daten betreffend eines oder mehrerer Maschinenzustände einer das Bauteil herstellenden Maschine während der Herstellung des Bauteils.

Die Erfassung von Daten betreffend Maschinenzustände während der Herstellung ermöglicht eine Korrelation zwischen den Maschinenparametern und der Bauteilqualität, was zu einer gezielten Anpassung der Maschineneinstellungen für optimale Ergebnisse führen kann.

Beispiele für denkbare Maschinenzustände sind Betriebstemperatur, Spindeldrehzahl, Vibrationsniveau, Schmiermittelstand, Kühlmittelstand, Werkzeugverschleißstatus, Druck im Hydrauliksystem, Maschinenauslastung, Betriebszeit, Störungs- oder Fehlermeldungen und/oder dergleichen.

Gemäß einer bevorzugten Weiterbildung der Erfindung betreffen die prozessualen Daten einen Prüfprozess des Bauteils, insbesondere Sensordaten, die während des Prüfprozess erfasst wurden.

Durch die Analyse der Prüfprozessdaten können spezifische Schwachstellen des Bauteils identifiziert werden, was zu einer Erhöhung der Lebensdauer führen kann.

Beispiele für solche Sensordaten sind Kraftmessungen während einer Belastungsprüfung, Schwingungsmessungen bei einer Vibrationsprüfung, Temperaturmessungen bei einer Wärmebehandlung, optische Inspektionen zur Oberflächenkontrolle, akustische Messungen zur Erkennung von Rissen oder anderen strukturellen Fehlern, elektrische Widerstandsmessungen bei einer Leitfähigkeitsprüfung.

Durch die übergreifende Verarbeitung von Sensordaten zum Bauteil, prozessualen Herstellungsdaten und/oder prozessualen Prüfdaten können komplexe Zusammenhänge und multiple Abhängigkeiten zwischen den verschiedenen Aspekten des Fertigungs- und Prüfprozesses besser verstanden und analysiert werden. Diese integrierte Betrachtung ermöglicht es, nicht nur isolierte Probleme zu identifizieren, sondern auch Wechselwirkungen zwischen Herstellungsbedingungen und Prüfergebnissen zu erkennen, die auf tieferliegende Ursachen für Qualitätsabweichungen hindeuten könnten. Beispielsweise kann die Kombination von Temperaturdaten aus dem Herstellungsprozess mit den Ergebnissen der Belastungsprüfung aufzeigen, wie bestimmte Temperaturbedingungen die mechanische Festigkeit des Bauteils beeinflussen. Ebenso können Abweichungen in den Maschineneinstellungen während der Produktion im Zusammenhang mit späteren Prüfungen analysiert werden, um zu verstehen, wie diese Abweichungen die finalen Bauteileigenschaften beeinträchtigen.

Gemäß einer bevorzugten Weiterbildung der Erfindung umfassen die Eingangsdaten zweiter Art einen deskriptiven Text, insbesondere eine textuelle Benutzereingabe, eine Teileliste und/oder dergleichen.

Die Integration eines deskriptiven Texts als Eingangsdaten zweiter Art, insbesondere durch textuelle Benutzereingaben, Teilelisten und ähnliche Informationen, ermöglicht eine erweiterte Analyse, die qualitative und strukturelle Informationen in die Datenverarbeitung einbezieht. Beispiele für solche deskriptiven Texte sind spezifische Anmerkungen von Bedienpersonal zu einem Produktionsvorgang, detaillierte Teilelisten mit Materialangaben und Stückzahlen, sowie textuelle Aufzeichnungen von Wartungs- und Inspektionsprotokollen.

Gemäß einer bevorzugten Weiterbildung der Erfindung werden die transformierten Eingangsdaten mittels künstlicher Intelligenz analysiert.

Durch die Implementierung von maschinellem Lernen und adaptiven Algorithmen kann das System kontinuierlich aus den analysierten Daten lernen sowie Muster und Zusammenhänge erkennen, die für traditionelle Analyseverfahren schwer zugänglich sind. Dies führt zu einer effizienteren und genaueren Identifikation von Anomalien und Optimierungspotenzialen im Fertigungsprozess, da künstliche Intelligenz in der Lage ist, große Datenmengen in kurzer Zeit zu verarbeiten und daraus aussagekräftige Schlussfolgerungen zu ziehen.

Künstliche Intelligenz kann multiple Abhängigkeiten besonders gut identifizieren, weil sie in der Lage ist, große und komplexe Datensätze zu verarbeiten und dabei auch nichtlineare Beziehungen zwischen den Variablen zu erkennen. Anders als konventionelle statistische Methoden, die oft auf linearen Modellen basieren und nur eindeutige, vorher festgelegte Zusammenhänge analysieren, kann künstliche Intelligenz, insbesondere durch den Einsatz von neuronalen Netzen oder anderen fortschrittlichen Algorithmen, Muster in den Daten erkennen, ohne dass diese Beziehungen vorab definiert werden müssen. Zudem ist künstliche Intelligenz in der Lage, durch kontinuierliches Lernen aus neuen Daten ihre Modelle anzupassen und zu verfeinern, was die Erkennung von komplexen Interdependenzen im Laufe der Zeit weiter verbessert. Dies macht sie besonders geeignet für die Analyse von Prozessen, in denen viele verschiedene Faktoren miteinander interagieren.

Gemäß einer bevorzugten Weiterbildung der Erfindung werden Eingangsdaten n-ter Art bereitgestellt, transformiert und analysiert, wobei n eine ganze Zahl größer 2 ist, und wobei n insbesondere variabel ist.

Dies gewährleistet eine hohe Flexibilität des Verfahrens, sodass es für verschiedene Eingangsdatenstrukturen anpassbar ist.

Die Möglichkeit, n variabel zu gestalten, erlaubt eine skalierbare Anpassung des Verfahrens an die spezifischen Anforderungen der Datenanalyse, was zu einer effizienten Verarbeitung sowohl kleiner als auch großer Datensätze führt.

Es versteht sich, dass ein Datenverarbeitungssystem zur Durchführung des Verfahrens wie es vorstehend beschrieben wurde, mit mehreren Schnittstellen, um Eingangsdaten zu erhalten, einer Schnittstelle zu wenigstens einer Recheneinheit, um Eingangsdaten zu transformieren und transformierte Eingangsdaten zu analysieren, wenigstens einem Datenspeicher, um Eingangsdaten und Ergebnisse des Verfahrens nach einem der vorstehenden Ansprüche zu speichern, vorteilhaft ist.

Die Bereitstellung mehrerer Schnittstellen zur Erfassung von Eingangsdaten ermöglicht eine vielseitige Konnektivität und die Integration verschiedener Datenquellen. Dies gewährleistet Universalität und Anwendungsbreite des Datenverarbeitungssystems.

Ein Computerprogrammprodukt gemäß einem Verfahren einer Ausführungsform der Erfindung führt die Schritte eines Verfahrens gemäß der vorangehenden Beschreibung aus, wenn das Computerprogrammprodukt auf einem Computer, insbesondere einem fahrzeuginternen Computer, läuft. Wenn das betreffende Programm auf einem Computer zum Einsatz kommt, ruft das Computerprogrammprodukt einen Effekt hervor, nämlich die Analyse von Eingangsdaten verschiedener Struktur zur Klassifikation von Bauteilen.

### INHALTSANGABE DER ZEICHNUNGEN

Die vorliegende Erfindung wird nachfolgend anhand der in den schematischen Figuren der Zeichnungen angegebenen Ausführungsbeispiele näher erläutert. Es zeigen dabei:

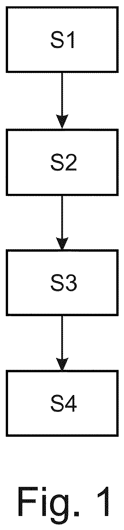

- Figur 1: ein schematisches Blockdiagramm einer Ausführungsform der Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnungen sind gleiche, funktionsgleiche und gleichwirkende Elemente, Merkmale und Komponenten - sofern nicht anders ausgeführt ist - jeweils mit denselben Bezugszeichen versehen.

### BESCHREIBUNG VON AUSFÜHRUNGSBEISPIELEN

Figur 1 zeigt ein schematisches Blockdiagramm eines Verfahrens zum Analysieren von Bauteilen, insbesondere deren Qualität, in einem industriellen Fertigungsprozess mit den Schritten S1 bis S4.

In dem Schritt S1 werden Eingangsdaten erster Art bereitgestellt, die das zu analysierende Bauteil betreffen. In dem Schritt S2 werden Eingangsdaten zweiter Art bereitgestellt, die das zu analysierende Bauteil betreffen. In dem Schritt S3 werden die Eingangsdaten erster Art und zweiter Art und/oder hieraus jeweils abgeleitete Daten in einen gemeinsamen Vektorraum transformiert, um transformierte Eingangsdaten zu erhalten. In dem Schritt S4 werden die transformierten Eingangsdaten analysiert, mit dem Ziel, die transformierten Eingangsdaten zu klassifizieren.

### Bezugszeichen

S1-S4 Verfahrensschritte

## Patentansprüche

1. Verfahren zum Analysieren von Bauteilen, insbesondere deren Qualität, in einem industriellen Fertigungsprozess mit den folgenden Schritten:
- Bereitstellen (S1) von ein zu analysierendes Bauteil betreffende Eingangsdaten erster Art;
- Bereitstellen (S2) von ein zu analysierendes Bauteil betreffende Eingangsdaten zweiter Art;
wobei die Eingangsdaten erster Art und die Eingangsdaten zweiter Art auf Sensordaten verschiedener physikalischer Messprinzipien beruhen und/oder Sensordaten und prozessuale Daten umfassen;
- Transformieren (S3) der Eingangsdaten erster Art und zweiter Art und/oder hieraus jeweils abgeleiteter Daten in einen gemeinsamen Vektorraum, um transformierte Eingangsdaten zu erhalten;
- Analysieren (S4) der transformierten Eingangsdaten, mit dem Ziel, die transformierten Eingangsdaten zu klassifizieren.

2. Verfahren nach Anspruch 1,
wobei eine oder mehrere Ähnlichkeiten zwischen den transformierten Eingangsdaten und historischen transformierten Eingangsdaten ermittelt wird, insbesondere wenn die transformierten Eingangsdaten nicht mit einer Klassifikationswahrscheinlichkeit, die einen vorbestimmten Schwellwert übersteigt, klassifiziert wurden.

3. Verfahren nach Anspruch 2,
wobei eine Ähnlichkeit der transformierten Eingangsdaten zu historischen transformierten Eingangsdaten ermittelt wird, indem eine Metrik vorgegeben wird, und basierend auf der Metrik ein Abstand zwischen den transformierten Eingangsdaten und den historischen transformierten Eingangsdaten ermittelt wird.

4. Verfahren nach Anspruch 2 oder Anspruch 3,
wobei neben einer ermittelten Ähnlichkeit zwischen transformierten Eingangsdaten und historischen transformierten Eingangsdaten zu den historischen transformierten Eingangsdaten gehörige bereitgestellte Eingangsdaten ausgegeben werden, um das Bauteil mit alternativen Mitteln zu analysieren.

5. Verfahren nach einem der vorstehenden Ansprüche,
wobei die Eingangsdaten erster Art als das zu analysierende Bauteil direkt betreffende Sensordaten ausgebildet sind.

6. Verfahren nach Anspruch 5,
wobei die Sensordaten Geometriedaten des zu analysierenden Bauteils umfassen.

7. Verfahren nach einem der vorstehenden Ansprüche,
wobei die Eingangsdaten zweiter Art prozessuale Daten zu einem das Bauteil betreffenden Prozesses umfassen.

8. Verfahren nach Anspruch 7,
wobei die prozessualen Daten einen Herstellungsprozess des Bauteils betreffen, insbesondere Daten betreffend eines oder mehrerer Maschinenzustände einer das Bauteil herstellenden Maschine während der Herstellung des Bauteils.

9. Verfahren nach Anspruch 7 oder 8,
wobei die prozessualen Daten einen Prüfprozess des Bauteils betreffen, insbesondere Sensordaten, die während des Prüfprozess erfasst wurden.

10. Verfahren nach einem der vorstehenden Ansprüche,
wobei die Eingangsdaten zweiter Art einen deskriptiven Text umfassen, insbesondere eine textuelle Benutzereingabe, eine Teileliste und/oder dergleichen.

11. Verfahren nach einem der vorstehenden Ansprüche,
wobei die transformierten Eingangsdaten mittels künstlicher Intelligenz analysiert werden.

12. Verfahren nach einem der vorstehenden Ansprüche,
wobei Eingangsdaten n-ter Art bereitgestellt, transformiert und analysiert werden, wobei n eine ganze Zahl größer 2 ist, und wobei n insbesondere variabel ist.

13. Datenverarbeitungssystem zur Durchführung des Verfahrens nach einem der vorstehenden Ansprüche, mit
- mehreren Schnittstellen, um Eingangsdaten zu erhalten,
- einer Schnittstelle zu wenigstens einer Recheneinheit, um Eingangsdaten zu transformieren und transformierte Eingangsdaten zu analysieren;
- wenigstens einem Datenspeicher, um Eingangsdaten und Ergebnisse des Verfahrens nach einem der vorstehenden Ansprüche zu speichern.

14. Computerprogrammprodukt umfassend Befehle, die eine Hardwarekomponente eines Computers veranlassen, das Verfahren nach einem der vorangehenden Ansprüche 1-12 auszuführen, wenn das Computerprogramm auf die/von der Hardwarekomponente geladen oder von dieser ausgeführt wird.
